# EUROPEAN PATENT APPLICATION

(11) **EP 4 738 554 A1**
(43) Date of publication of application: **06.05.2026**
(21) Application number: 25213243.6
(22) Date of filing: 04.11.2025
(51) Int. Cl.: H01M 50/15, H01M 50/169, H01M 50/186, H01M 50/188, H01M 50/553, H01M 50/593

(54) **CAP ASSEMBLY AND BATTERY CELL COMPRISING THE SAME**

(30) Priority: 05.11.2024 KR 20240155144; 19.11.2024 KR 20240165053
(71) Applicant: SK On Co., Ltd., Seoul 03161 (KR)
(72) Inventor: CHEONG, Hoemin, Daejeon 34124 (KR); JU, Seung Hoon, Daejeon 34124 (KR); PARK, Seong Che, Daejeon 34124 (KR)
(74) Representative: Prüfer & Partner mbB Patentanwälte · Rechtsanwälte

(57) **Abstract**

The present disclosure relates to a cap assembly coupled to a case that accommodates an electrode assembly to cover one open side of the case, the cap assembly comprising: a cap plate including a first hole; a cylindrical terminal portion including an insertion hole and inserted into the first hole to be connected to the electrode assembly; a sheet-shaped first insulating member disposed to face the cap plate; and a heat insulating member disposed between the first insulating member and the terminal portion.

## Description

### BACKGROUND OF THE INVENTION

### 1. Field

The present disclosure relates to a cap assembly and a battery cell including the same.

### 2. Description of the Related Art

Unlike a primary battery, a secondary battery has the convenience of being chargeable and dischargeable, and therefore has attracted much attention as a power source for various mobile devices and electric vehicles.

Since the secondary battery can be charged and discharged, it can be applied to various fields such as digital cameras, mobile phones, notebook computers, hybrid vehicles, electric vehicles, and energy storage systems (ESS; Energy Storage System).

Such a secondary battery may include a battery cell in which an electrode assembly formed by stacking or winding a positive electrode plate, a negative electrode plate, and a separator into a roll form is accommodated in a case.

Meanwhile, the battery cell may be manufactured by a welding process or the like. In this case, heat generated during welding may be transferred to components vulnerable to heat, thereby melting such components. In addition, during use of the battery cell or under a thermal runaway condition, heat may be transmitted to the components, causing them to melt. Accordingly, there is a need for research into technologies for preventing the propagation of heat from a heat source to adjacent components.

In general, a battery cell has a structure in which an electrode assembly is accommodated in a case, and may include a cap assembly covering the case. The cap assembly may be coupled to the case and electrically connected to the electrode assembly. An electrode terminal electrically connected to an external component may be formed to protrude outward from the cap assembly.

Meanwhile, the cap assembly includes an electrical insulating member, which is vulnerable to heat and may be damaged by heat. Accordingly, there is a demand for a measure to protect the insulating member from heat.

### SUMMARY OF THE INVENTION

According to one aspect of the present disclosure, a task to be solved is to improve the stability of an electrode assembly and/or a battery cell.

According to another aspect of the present disclosure, a task to be solved is to improve the heat resistance of the electrode assembly and/or the battery cell.

According to another aspect of the present disclosure, a task to be solved is to reduce the manufacturing cost of the electrode assembly and/or the battery cell.

According to another aspect of the present disclosure, a task to be solved is to minimize or prevent the propagation of heat from a heat source to adjacent components.

According to another aspect of the present disclosure, a task to be solved is to minimize or prevent melting of an insulating plate disposed on a rear surface of a cap plate.

Meanwhile, the cap assembly and the battery cell including the same according to the present disclosure may be widely applied to green technology fields such as electric vehicles (EV), battery charging stations, energy storage systems (ESS), photovoltaics, and wind power utilizing battery cells. In addition, the electrode assembly and the battery cell including the same according to the present disclosure may be used in eco-friendly mobility, including electric vehicles and hybrid vehicles, for preventing climate change by suppressing air pollution and greenhouse gas emissions.

As a technical means to achieve the technical objects, a cap assembly coupled to a case that accommodates an electrode assembly to cover one open side of the case according to the present disclosure may comprise: a cap plate including a first hole; a cylindrical terminal portion including an insertion hole and inserted into the first hole to be connected to the electrode assembly; a sheet-shaped first insulating member disposed to face the cap plate; and a heat insulating member disposed between the first insulating member and the terminal portion.

The cap assembly according to the present disclosure may further include a terminal plate disposed on the cap plate.

The cap assembly according to the present disclosure may further include a second insulating member disposed between the cap plate and the terminal plate.

The cap assembly according to the present disclosure may further include a gasket disposed between the terminal portion and the cap plate.

In one embodiment, the heat insulating member may have a plate shape including a ring-shaped second hole.

In one embodiment, a diameter of the second hole may be greater than a diameter of the insertion hole.

In one embodiment, the heat insulating member may be formed of any one or a combination of PI (polyimide), PP (polypropylene), PPS (polyphenylene sulfide), and C-PET (crystalline polyethylene terephthalate).

The cap assembly according to the present disclosure may further include a support plate coupled to an outer circumferential surface of the terminal portion.

As a technical means to achieve the technical objects, a battery cell according to the present disclosure may include an electrode assembly, a case having an accommodation space formed therein to accommodate the electrode assembly, and a cap assembly coupled to the case to cover one open side of the case, wherein the cap assembly may comprise a cap plate including a first hole, a cylindrical terminal portion including an insertion hole and inserted into the first hole to be connected to the electrode assembly, a sheet-shaped first insulating member disposed to face the cap plate, and a heat insulating member disposed between the first insulating member and the terminal portion.

The battery cell according to the present disclosure may further include a current collector plate disposed to face the cap plate and electrically connected to the electrode assembly.

In one embodiment, the current collector plate may include a connection pin, and the insertion hole and the connection pin may be welded to each other.

In one embodiment, the cap assembly may further include a support plate disposed between the heat insulating member and the current collector plate.

In one embodiment, the heat insulating member may be disposed between the first insulating member and the support plate, and the first insulating member may be disposed between the cap plate and the heat insulating member.

As a technical means to achieve the technical objects, a battery cell according to an embodiment of the present disclosure may include a case having at least one opening for accommodating an electrode assembly; and a cap assembly coupled to the case, wherein the cap assembly may include a plate portion disposed at the opening; a fixing member disposed between the plate portion and the electrode assembly; and a heat blocking member disposed between the plate portion and the fixing member.

According to one embodiment, the plate portion may include a cap plate closing the opening and an insulating plate coupled to one surface of the cap plate facing the electrode assembly.

According to one embodiment, the heat blocking member may be disposed between the insulating plate and the fixing member to prevent heat from propagating from the fixing member toward the insulating plate.

According to one embodiment, the heat blocking member may include a first blocking portion covering one surface of the fixing member facing the plate portion, and a second blocking portion covering a side surface of the fixing member.

According to one embodiment, the cap assembly may further include a terminal portion electrically connected to the electrode assembly, and the terminal portion may be coupled to the fixing member.

According to one embodiment, the terminal portion may include a rivet terminal of which at least a portion is inserted into the plate portion and the fixing member and electrically connected to the electrode assembly; and a terminal unit coupled to the rivet terminal and having at least a portion exposed outside the cap plate.

According to one embodiment, the battery cell may further include a first weld portion formed by welding between the rivet terminal and the fixing member, and the heat blocking member may be disposed on a first heat transfer path to prevent heat generated during formation of the first weld portion from being conducted to the insulating plate.

According to one embodiment, the terminal portion may further include a gasket disposed between the rivet terminal and the plate portion.

According to one embodiment, the terminal portion may further include a terminal cover for electrical insulation between the terminal unit and the cap plate.

According to one embodiment, the battery cell may further include a connection assembly disposed at least partially between the cap assembly and the electrode assembly to electrically connect the terminal portion and the electrode assembly to each other.

According to one embodiment, the connection assembly may include a current collecting member electrically connected to a non-coated portion of the electrode assembly; and a connection pin protruding from the current collecting member toward the terminal portion.

According to one embodiment, at least a portion of the connection pin may be inserted into the rivet terminal to be electrically connected to the terminal portion.

According to one embodiment, the battery cell may further include a second weld portion formed by welding between the connection pin and the rivet terminal, and the heat blocking member may be disposed to prevent heat generated during formation of the second weld portion from being conducted to the insulating plate.

As a technical means to achieve the technical objects, a battery module according to an embodiment of the present disclosure may include a module housing and at least one battery cell disposed in the module housing, wherein the battery cell may include a case having an opening at least one side to accommodate an electrode assembly, and a cap assembly coupled to the case, the cap assembly may include a plate portion disposed at the opening, a fixing member disposed between the plate portion and the electrode assembly, and a heat blocking member disposed between the plate portion and the fixing member.

As a technical means to achieve the technical objects, a battery pack according to an embodiment of the present disclosure may include a pack housing and at least one battery cell disposed in the pack housing, wherein the battery cell may include a case having an opening at least one side to accommodate an electrode assembly, and a cap assembly coupled to the case, the cap assembly may include a plate portion disposed at the opening, a fixing member disposed between the plate portion and the electrode assembly, and a heat blocking member disposed between the plate portion and the fixing member.

According to an embodiment of the present disclosure, the stability of an electrode assembly and/or a battery cell can be improved.

According to another embodiment of the present disclosure, the heat resistance of the electrode assembly and/or the battery cell can be improved.

According to another embodiment of the present disclosure, the manufacturing cost of the electrode assembly and/or the battery cell can be reduced.

According to another embodiment of the present disclosure, the propagation of heat from a heat source to adjacent components can be minimized or prevented.

According to another embodiment of the present disclosure, melting of an insulating plate disposed on a rear surface of a cap plate can be minimized or prevented.

### BRIEF DESCRIPTION OF THE DRAWINGS

FIG. 1 is an exploded perspective view of a bidirectional battery cell according to the present disclosure.
FIG. 2 is an exploded perspective view of a cap assembly.
FIG. 3 is a cross-sectional view of the cap assembly.
FIG. 4 is a cross-sectional view showing a state in which the electrode assembly is coupled to the cap assembly.
FIG. 5 is a perspective view of a unidirectional battery cell according to the present disclosure.
FIG. 6 is a perspective view of a battery cell according to an embodiment of the present disclosure.
FIG. 7 is an exploded view of a battery cell according to an embodiment of the present disclosure.
FIG. 8 is an exploded view of a cap assembly according to an embodiment of the present disclosure.
FIG. 9 is a cross-sectional view of a cap assembly according to an embodiment of the present disclosure.
FIG. 10 is a view showing a heat transfer path generated during welding of the cap assembly according to an embodiment of the present disclosure.
FIG. 11 is an exemplary view showing a state in which the electrode assembly and the connection assembly are connected according to an embodiment of the present disclosure.
FIG. 12 is an exemplary view showing a state in which the cap assembly and the case are coupled according to an embodiment of the present disclosure.
FIG. 13 is a cross-sectional view according to an embodiment of the present disclosure.
FIG. 14 is a view showing a heat transfer path generated during welding of the connection assembly according to an embodiment of the present disclosure.
FIG. 15 is a cross-sectional view of a welded state of a battery cell according to an embodiment of the present disclosure.
FIG. 16 is an exemplary view showing a battery module and a battery pack including the battery cell according to the present disclosure.

### DETAILED DESCRIPTION

Hereinafter, preferred embodiments of the present disclosure will be described in detail with reference to the accompanying drawings. The configuration or control method of the device described below is merely for explaining embodiments of the present disclosure and is not intended to limit the scope of the present disclosure, and the same reference numerals used throughout the specification denote the same components.

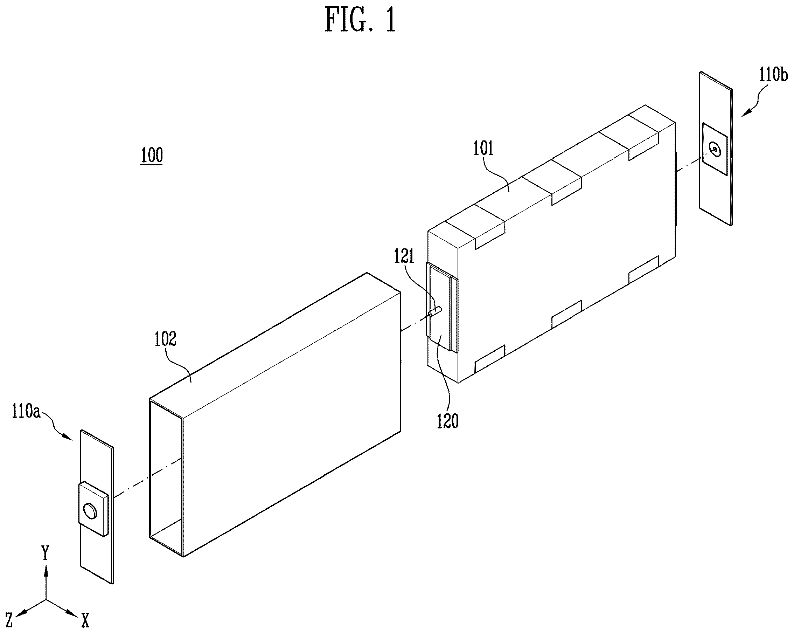

FIG. 1 is an exploded perspective view of a bidirectional battery cell according to the present disclosure.

Referring to FIG. 1, a battery cell 100 according to the present disclosure may include an electrode assembly 101 for generating or storing electrical energy, a case 102 having an accommodation space formed therein to accommodate the electrode assembly 101, a cap assembly 110a coupled to the case 102 to cover one open side of the case 102, and a cap assembly 110b coupled to the case 102 to cover the other open side of the case 102.

The battery cell 100 of the present disclosure may represent a bidirectional battery cell in which a positive terminal is formed on one side of the electrode assembly 101 and a negative terminal is formed on the other side of the electrode assembly 101.

The case 102 may form an external shape of the battery cell 100. The case 102 may have the form of a hexahedron with both sides open. FIG. 1 illustrates an example in which the case 102 has a rectangular shape; however, the shape of the battery cell 100 according to the present disclosure is not limited thereto. That is, the battery cell 100 according to the present disclosure may be formed as a pouch type, cylindrical type, or another type of battery cell. The case 102 may include a conductive metal such as aluminum, an aluminum alloy, or nickel-plated steel.

The electrode assembly 101 may include a current collector plate 120 disposed on one side of the electrode assembly 101. The current collector plate 120 may be a plate-shaped member including a conductive metal. The current collector plate 120 may be electrically connected to the electrode assembly 101.

The current collector plate 120 may include a connection pin 121 for electrically connecting the electrode assembly 101 and the cap assembly 110a. The connection pin 121 may be implemented as a separate member assembled to the current collector plate 120, or may be integrally formed with the current collector plate 120.

Although not shown, the battery cell 100 of the present disclosure may further include another current collector disposed on the other side of the electrode assembly 101 and including a connection pin for electrically connecting the electrode assembly 101 and the cap assembly 110b.

The electrode assembly 101 may be accommodated in an accommodation space formed inside the case 102 in a Z-axis direction.

The cap assembly 110a may be assembled to one open side of the case 102 in the Z-axis direction. The cap assembly 110b may be assembled to the other open side of the case 102 in the Z-axis direction.

The cap assembly 110a, 110b may protect the electrode assembly 101 accommodated inside the case 102. The cap assembly 110a may be welded to one open side of the case 102. The cap assembly 110b may be welded to the other open side of the case 102.

Hereinafter, for convenience of explanation, a description will be given of the cap assembly 110a coupled to the case 102 to cover one open side of the case 102. The description of the cap assembly 110a may equally apply to the cap assembly 110b covering the other open side of the case 102.

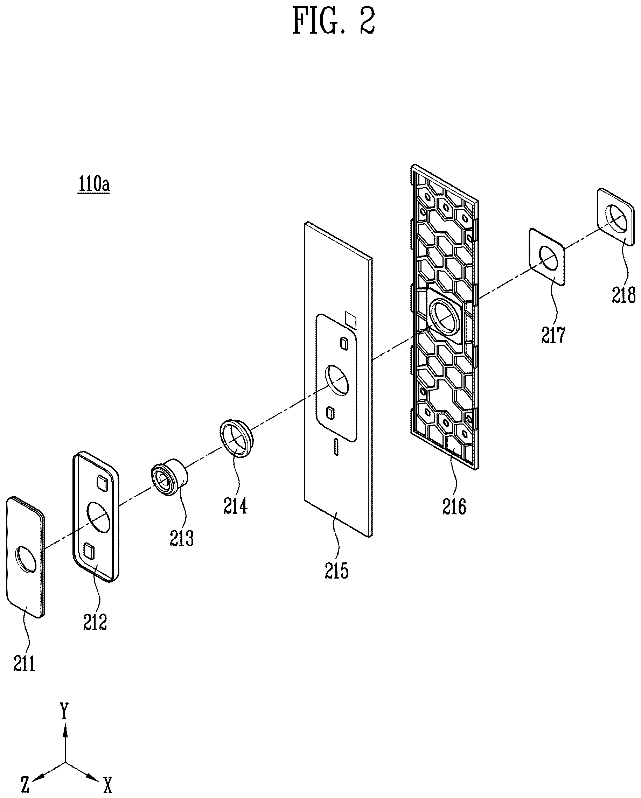

FIG. 2 is an exploded perspective view of a cap assembly.

Referring to FIG. 2, the cap assembly 110a according to the present disclosure may include a cap plate 215 including a hole, a terminal portion 213 inserted into the hole of the cap plate 215, a first insulating member 216 disposed to face the cap plate 215, and a heat insulating member 217 disposed between the first insulating member 216 and the terminal portion 213.

The cap plate 215 may be formed in a plate shape (or sheet shape) so as to cover the open portion of the case 102. The cap plate 215 may be made of a conductive metal including aluminum or an aluminum alloy. However, this is merely an example, and the material of the cap plate 215 according to the present disclosure is not limited thereto.

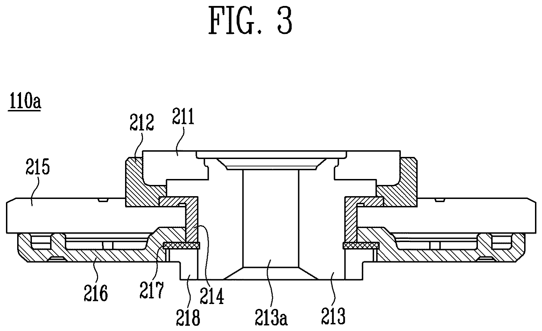

The terminal portion 213 may represent a rivet. The terminal portion 213 may include an insertion hole (213a of FIG. 3) to be connected to the electrode assembly 101. The terminal portion 213 may be formed in a cylindrical shape. The terminal portion 213 may be made of a conductive member.

The first insulating member 216 may be formed in a plate shape (or sheet shape). The first insulating member 216 may include a hole having a size corresponding to the size of the hole included in the cap plate 215. The first insulating member 216 may electrically separate the cap plate 215 from the electrode assembly 101. For example, the first insulating member 216 may be formed of an insulating material. The area of the first insulating member 216 may be the same as that of the cap plate 215.

The heat insulating member 217 may prevent heat from being transferred to the first insulating member 216. The heat insulating member 217 may be formed of any one or a combination of PI (polyimide), PP (polypropylene), PPS (polyphenylene sulfide), and C-PET (crystalline polyethylene terephthalate). However, this is merely an example, and the material of the heat insulating member 217 according to the present disclosure may be formed of various materials.

The heat insulating member 217 may be formed in a plate shape (or sheet shape) including a ring-shaped hole. A diameter of the ring-shaped hole may correspond to (or be the same as) a diameter of the hole included in the cap plate 215. The diameter of the ring-shaped hole may be greater than a diameter of the insertion hole (213a of FIG. 3).

The cap assembly 110a according to the present disclosure may include a terminal plate 211 disposed on the cap plate 215. The terminal plate 211 may represent a connection terminal electrically connecting the battery cell 100 to an external component. An area of the terminal plate 211 may be smaller than that of the cap plate 215. The terminal plate 211 may be formed of a conductive metal member. For example, the terminal plate 211 may be made of a metal member including aluminum or an aluminum alloy. However, this is merely an example, and the material of the terminal plate 211 according to the present disclosure is not limited thereto.

The cap assembly 110a according to the present disclosure may include a second insulating member 212 disposed between the cap plate 215 and the terminal plate 211. The second insulating member 212 may electrically separate the cap plate 215 from the terminal plate 211. The second insulating member 212 may include a hole having a size corresponding to the size of the hole included in the cap plate 215. The terminal portion 213 may be inserted into the hole of the terminal plate 211 and the hole of the second insulating member 212. For example, the second insulating member 212 may be formed of an insulating material. The area of the second insulating member 212 may be the same as that of the terminal plate 211.

The cap assembly 110a according to the present disclosure may include a gasket 214 disposed between the terminal portion 213 and the cap plate 215. The gasket 214 may electrically separate the terminal portion 213 from the cap plate 215. The gasket 214 may have a ring shape including a hole.

The cap assembly 110a according to the present disclosure may include a support plate 218 disposed between the heat insulating member 217 and the current collector plate 120. The support plate 218 may include a hole. The terminal portion 213 may be coupled through the holes formed in the terminal plate 211, the second insulating member 212, the gasket 214, the cap plate 215, the first insulating member 216, the heat insulating member 217, and the support plate 218.

The support plate 218 may be coupled to an outer circumferential surface of the terminal portion 213. The support plate 218 may prevent the components included in the cap assembly 110a, in which the terminal portion 213 is inserted into the hole of the support plate 218 and coupled thereto, from being physically separated from one another.

FIG. 3 is a cross-sectional view of the cap assembly.

Referring to FIG. 3, through the terminal portion 213 of the present disclosure, the terminal plate 211, the second insulating member 212, the cap plate 215, the gasket 214, the first insulating member 216, the heat insulating member 217, and the support plate 218 may be coupled to one another.

The terminal portion 213 may be formed in a cylindrical shape. An outer circumferential surface of the terminal portion 213 may be coupled to the holes respectively included in the terminal plate 211, the second insulating member 212, the cap plate 215, the gasket 214, the first insulating member 216, the heat insulating member 217, and the support plate 218.

The diameters of the holes included in the terminal plate 211, the second insulating member 212, the cap plate 215, the gasket 214, the first insulating member 216, the heat insulating member 217, and the support plate 218 may correspond to (or be the same as) one another. The diameter of the outer circumferential surface of the terminal portion 213 may correspond to (or be the same as) the diameter of the hole included in the terminal plate 211.

The terminal portion 213 may include an insertion hole 213a that can be connected to the electrode assembly 101. A diameter of the insertion hole 213a may be smaller than the diameters of the holes included in the terminal plate 211, the second insulating member 212, the cap plate 215, the gasket 214, the first insulating member 216, the heat insulating member 217, and the support plate 218.

The second insulating member 212 may be disposed between the terminal plate 211 and the cap plate 215. The second insulating member 212 may electrically separate the cap plate 215 from the terminal plate 211.

The gasket 214 may electrically separate the terminal portion 213 from the cap plate 215. The gasket 214 may be disposed to surround an outer surface of the terminal portion 213. The gasket 214 may seal a gap between the terminal portion 213 and the cap plate 215 to prevent foreign substances outside the battery cell 100 from entering through the gap between the terminal portion 213 and the cap plate 215, or to prevent an electrolyte inside the battery cell 100 from leaking through the gap.

The heat insulating member 217 may be disposed between the first insulating member 216 and the support plate 218. The heat insulating member 217 may be disposed below the gasket 214. The heat insulating member 217 may prevent heat generated from the support plate 218 from being transferred to the first insulating member 216.

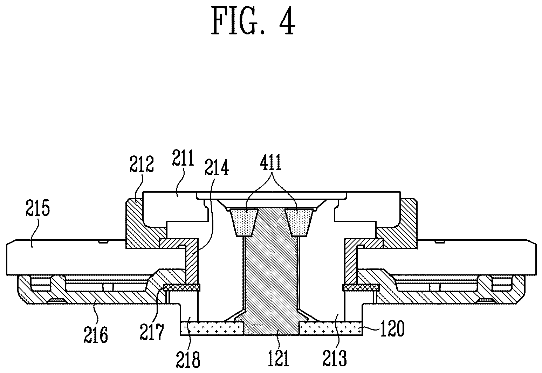

FIG. 4 is a cross-sectional view showing a state in which the electrode assembly is coupled to the cap assembly.

Referring to FIG. 4, the electrode assembly 101 of the present disclosure may be coupled to the cap assembly 110a.

The electrode assembly 101 of the present disclosure may include a current collector plate 120. The current collector plate 120 may be a plate-shaped member including a conductive metal. The current collector plate 120 may be disposed to face the cap plate 215 and may be electrically connected to the electrode assembly 101. The current collector plate 120 may include a connection pin 121 for electrically connecting the electrode assembly 101 and the cap assembly 110a. The connection pin 121 may be implemented as a separate member assembled to the current collector plate 120, or may be integrally formed with the current collector plate 120.

The connection pin 121 may be coupled to the insertion hole 213a included in the terminal portion 213. The connection pin 121 and the terminal portion 213 may be rivet-coupled through the insertion hole 213a. A diameter of the insertion hole 213a may be greater than or equal to a diameter of the connection pin 121.

After the connection pin 121 is rivet-coupled to the insertion hole 213a, a portion 411 in which the connection pin 121 and the insertion hole 213a are coupled may be welded by means of a welding device. For example, the welding device may include a laser welding device or an ultrasonic welding device.

The support plate 218 may be connected to the current collector plate 120. The support plate 218 may be disposed between the heat insulating member 217 and the current collector plate 120.

The welding heat generated when the insertion hole 213a and the connection pin 121 are welded may be transmitted to at least a portion of the terminal portion 213 and the support plate 218.

The electrode assembly 101 of the present disclosure may also include a current collector plate 120 in which the connection pin 121 is not formed. The electrode assembly 101 may be coupled to the cap assembly 110a through a busbar (not shown). For example, after the case 102 accommodating the electrode assembly 101 and the terminal plate 211 are coupled through the busbar, a portion of the coupled area may be welded. The welding heat generated when the portion coupled through the busbar is welded may be transmitted to at least a portion of the terminal portion 213 and the support plate 218.

The heat insulating member 217 may be disposed between the first insulating member 216 and the support plate 218. The heat insulating member 217 may prevent welding heat transmitted to at least a portion of the terminal portion 213 and the support plate 218 from being transferred to the first insulating member 216. Through this, the first insulating member 216 may not undergo shrinkage caused by welding heat. The first insulating member 216 is disposed between the cap plate 215 and the heat insulating member 217.

The heat insulating member 217 may be made of a material having a melting point higher than the temperature of the welding heat. The heat insulating member 217 may be formed of any one or a combination of PI (polyimide), PP (polypropylene), PPS (polyphenylene sulfide), and C-PET (crystalline polyethylene terephthalate). However, this is merely an example, and the material of the heat insulating member 217 according to the present disclosure may be formed of various materials.

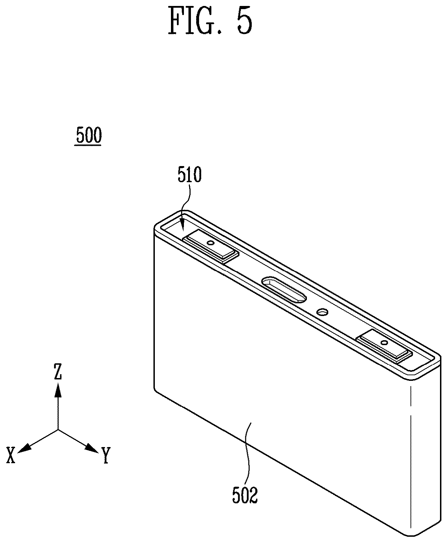

FIG. 5 is a perspective view of a unidirectional battery cell according to the present disclosure.

Referring to FIG. 5, a battery cell 500 according to the present disclosure may include an electrode assembly (not shown) for generating or storing electrical energy, a case 502 having an accommodation space formed therein to accommodate the electrode assembly, and a cap assembly 510 coupled to the case 502 to cover one open side of the case 502.

The battery cell 500 may represent a unidirectional battery cell in which a positive terminal and a negative terminal of the battery cell 500 are formed on one side. The description of the battery cell 100 according to the present disclosure may equally apply to the battery cell 500 according to the present disclosure.

The description of the cap assemblies 110a and 110b may equally apply to the cap assembly 510.

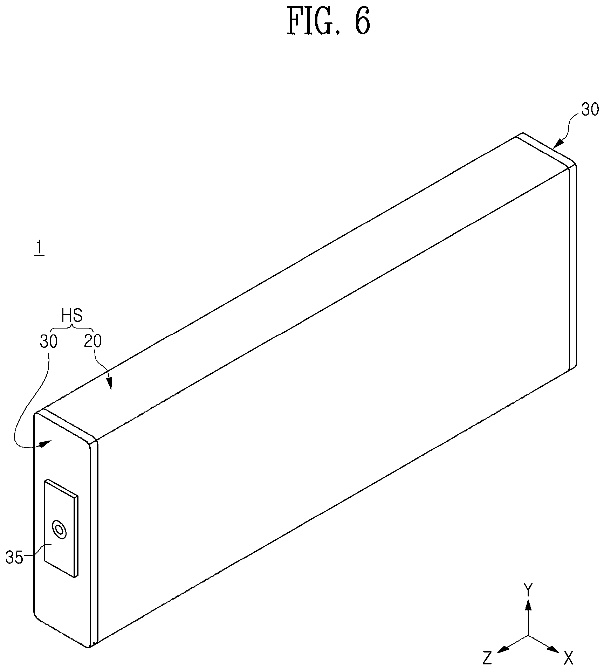

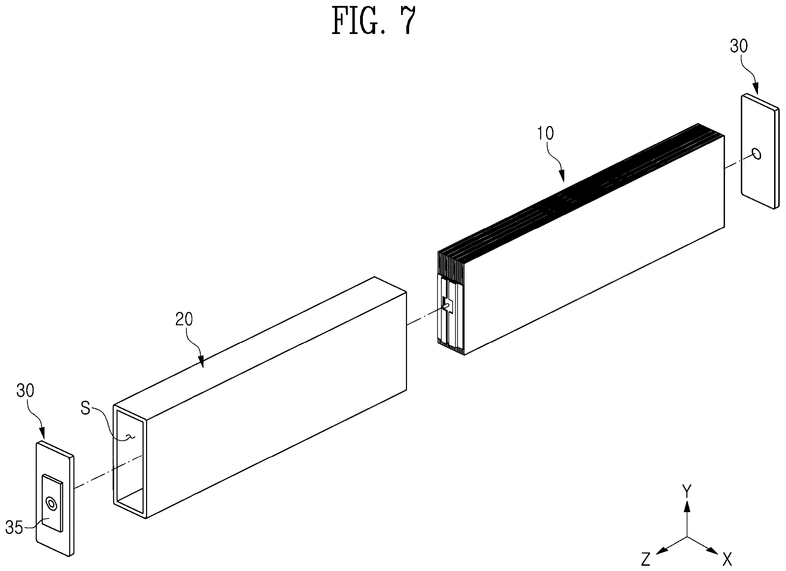

FIG. 6 is a perspective view of a battery cell according to an embodiment of the present disclosure. FIG. 7 is an exploded view of a battery cell according to an embodiment of the present disclosure.

The battery cell 1 of the present disclosure may be a secondary battery. For example, the battery cell 1 may be a lithium-ion battery, but is not limited thereto. For instance, the battery cell 1 may be a rechargeable and dischargeable nickel-cadmium battery, nickel-metal hydride battery, or nickel-hydrogen battery.

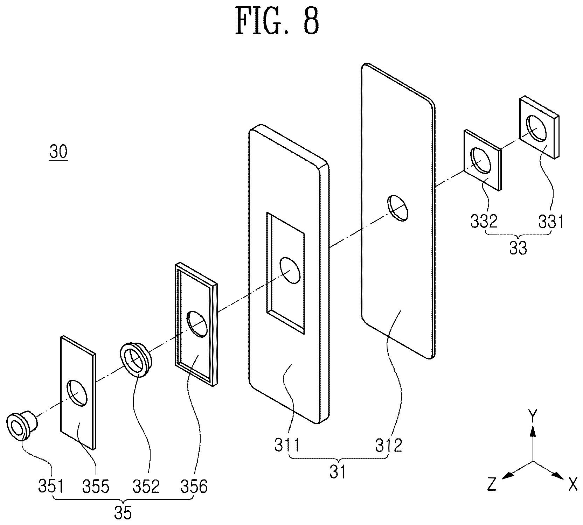

**A** battery cell 1 according to an embodiment of the present disclosure may include a case 20 having an opening at least one side to accommodate an electrode assembly 10, and a cap assembly 30 coupled to the case 20. The cap assembly 30 may include a plate portion 31 disposed at the opening, a fixing member 331 disposed between the plate portion 31 and the electrode assembly 10, and a heat blocking member 332 disposed between the plate portion 31 and the fixing member 331 (see FIG. 8).

Referring to FIGS. 6 and 7, the battery cell 1 of the present disclosure may include a cell housing HS including an electrode assembly 10, a case 20 having an accommodation space S for accommodating the electrode assembly 10, and a cap assembly 30 coupled to the case and including a terminal portion 35 electrically connected to the electrode assembly 10.

Meanwhile, the battery cell 1 of the present disclosure may be any one of a pouch type, prismatic type, or cylindrical type according to the type of the case 20. However, the present disclosure is not limited to these types, and any structure including the electrode assembly 10 may be regarded as the battery cell 1 of the present disclosure.

The electrode assembly 10 may be configured in a stacked form in which a positive electrode plate and a negative electrode plate face each other with a separator interposed therebetween. The separator may be configured to prevent electrical short-circuit between the positive electrode plate and the negative electrode plate and to allow the flow of ions. For example, the separator may include a porous polymer film or a porous nonwoven fabric. In addition, the electrode assembly may be accommodated in the case 20 in various forms, such as a jelly-roll type formed by winding in a predetermined direction, a stacking type, a Z-folding type, or a stack-folding type.

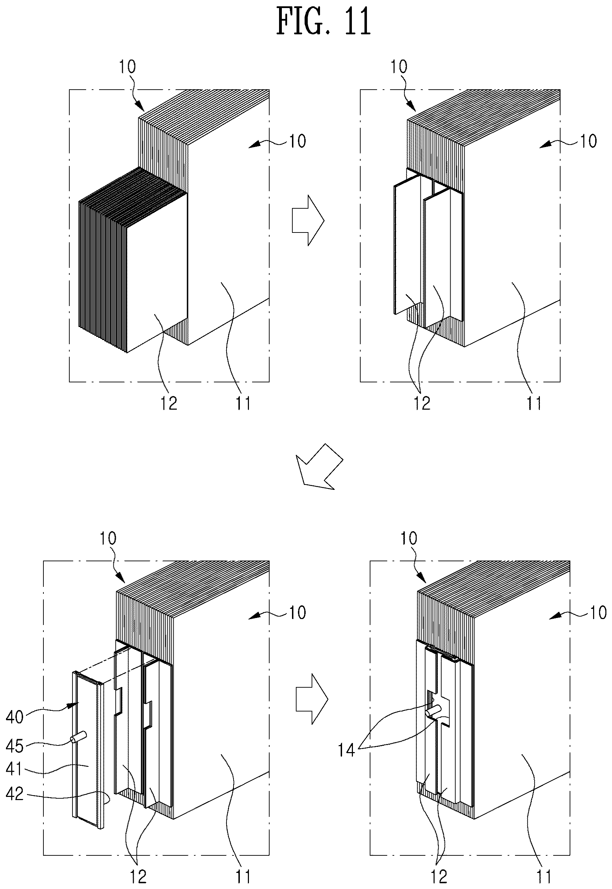

The positive electrode plate of the electrode assembly 10 may include a positive electrode current collector and a positive electrode active material applied to the positive electrode current collector. In some embodiments, the positive electrode current collector may include aluminum or an aluminum alloy, and the positive electrode active material may include lithium cobalt oxide, lithium manganese oxide, lithium nickel oxide, or lithium iron phosphate. The positive electrode active material may be coated on the surface of the positive electrode current collector. A portion of the positive electrode current collector on which the positive electrode active material is not coated may function as a positive electrode lead that electrically connects the adjacent member and the positive electrode active material, and may be referred to as a non-coated portion 12 (see FIG. 11).

The negative electrode plate of the electrode assembly 10 may include a negative electrode current collector and a negative electrode active material. In some embodiments, the negative electrode current collector may include copper, a copper alloy, nickel, or a nickel alloy, and the negative electrode active material may include carbon or silicon. The negative electrode active material may be coated on the surface of the negative electrode current collector. A portion of the negative electrode current collector on which the negative electrode active material is not coated may function as a negative electrode lead that electrically connects the adjacent member and the negative electrode active material, and may be referred to as a non-coated portion 12. That is, the electrode assembly 10 of the present disclosure may include a coated portion 11, which is a region where the active material is coated, and a non-coated portion 12, which is a region where the active material is not coated.

The case 20 may include an accommodation space S in which the electrode assembly 10 is accommodated. In addition, an electrolyte (not shown) may be accommodated in the accommodation space S. The case 20 may include a material having sufficient rigidity to protect the electrode assembly 10 inside and maintain the external shape of the battery cell 1. For example, at least a portion of the case 20 may be formed of a metallic material such as aluminum, iron, or stainless steel. However, the material of the case 20 is not limited thereto, and may be formed of any material having sufficient rigidity to maintain the external shape of the battery cell 1 and protect the electrode assembly inside.

The case 20 may include an opening (not shown) communicating with the accommodation space S. In the drawings, the openings are illustrated as being formed on both sides of the case 20; however, this is merely an example, and it is also possible for the opening to be formed on only one side.

The cap assembly 30 may be coupled to the case 20 to seal the opening of the case 20. In the drawings, the cap assembly 30 is disposed on both sides of the case 20; however, the present disclosure is not limited thereto. For example, when the opening of the case 20 is formed only on one side, the cap assembly 30 may also be disposed only on one side of the case 20. In addition, as shown in the drawings, when the cap assembly 30 is disposed on both sides of the case 20, the cap assembly 30 disposed on one side of the case 20 and the cap assembly 30 disposed on the other side of the case 20 may include the same configuration.

Hereinafter, the cap assembly 30 of the present disclosure will be described in more detail.

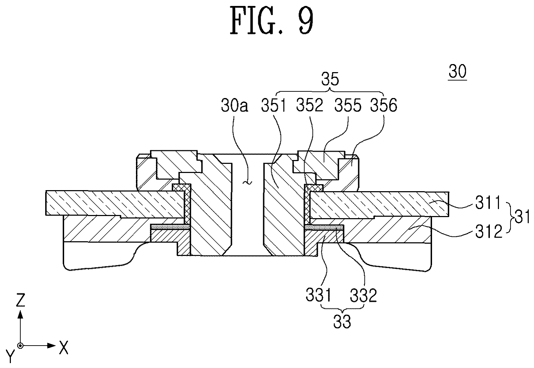

FIG. 8 is an exploded view of a cap assembly according to an embodiment of the present disclosure. FIG. 9 is a cross-sectional view of a cap assembly according to an embodiment of the present disclosure.

Referring to FIGS. 8 and 9, the cap assembly 30 of the present disclosure may include a plate portion 31 disposed at the opening of the case 20, a support portion 33 disposed between the plate portion 31 and the electrode assembly 10, and a terminal portion 35 electrically connected to the electrode assembly 10.

The plate portion 31 may be coupled to the case 20 to seal the opening of the case 20. In the present disclosure, the term "seal the opening" may mean "substantially sealing the opening." Specifically, "sealing the opening" may mean that at least a portion of the plate portion 31 is disposed in the opening of the case 20. That is, it is sufficient that the plate portion 31 blocks the opening so that the electrode assembly 10 accommodated in the accommodation space S does not escape to the outside. Thus, the term "seal" is not limited to hermetically sealing the opening so that a fluid cannot pass through, and the phrase "sealing the opening" may encompass meanings such as "closing the opening" or "covering the opening."

The plate portion 31 may include a cap plate 311 that closes the opening and an insulating plate 312 disposed on one surface of the cap plate 311.

The cap plate 311 may include a material having predetermined rigidity and may close the opening of the case 20. The cap plate 311 may include the same material as the case 20; however, the present disclosure is not limited thereto, and they may be made of different materials. According to one embodiment, the cap plate 311 may be coupled to the case 20 by welding, but the present disclosure is not limited thereto.

The insulating plate 312 may include an electrically insulating material and may be disposed between the cap plate 311 and the electrode assembly 10 to prevent a short circuit from occurring between the cap plate 311 and the components of the accommodation space S. Specifically, the insulating plate 312 may be coupled to a rear surface of the cap plate 311, that is, one surface of the cap plate 311 facing the electrode assembly 10.

The terminal portion 35 may be electrically connected to the electrode assembly 10 and coupled to the fixing member 331. At least a portion of the terminal portion 35 may be inserted into the plate portion 31 and electrically connected to another electrical member disposed in the accommodation space S (for example, the connection assembly 40 or the electrode assembly 10 described later).

The terminal portion 35 may include a rivet terminal 351, of which at least a portion is inserted into the plate portion 31 and the fixing member 331 to be electrically connected to the electrode assembly 10, and a terminal unit 355 coupled to the rivet terminal 351 and having at least a portion exposed outside the cap plate 311.

The terminal unit 355 may include an electrically conductive metal. The terminal unit 355 may be disposed, at least in part, on the cap plate 311 and may serve as a connection terminal that electrically connects the battery cell 1 and an external power source.

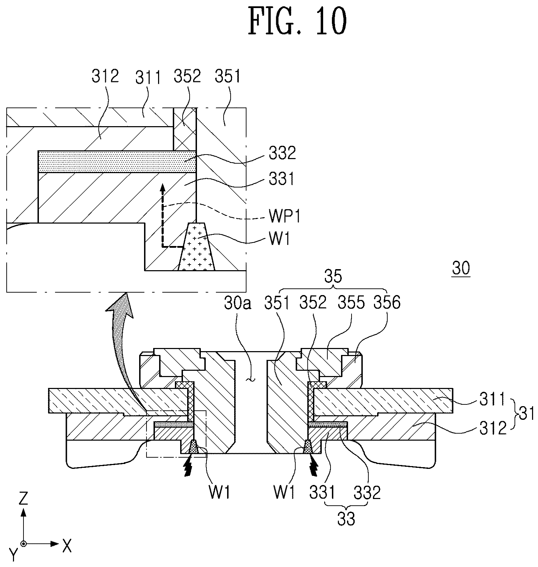

The rivet terminal 351 may include an electrically conductive metal. The rivet terminal 351 may be coupled to the terminal unit 355. The rivet terminal 351 may penetrate the terminal unit 355 and the plate portion 31 to be electrically connected to the connection assembly 40 described later. As described below, the rivet terminal 351 may be coupled to the support portion 33 by welding or the like to form a first weld portion W1, and may be coupled to the connection assembly 40 by welding or the like to form a second weld portion W2 (see FIG. 10).

In addition, the terminal portion 35 of the present disclosure may include a terminal cover 356 disposed between the terminal unit 355 and the cap plate 311 to prevent an electrical short circuit. The terminal portion 35 may further include a gasket 352 disposed between the rivet terminal 351 and the plate portion 31 to prevent an electrical short circuit. The gasket 352 and the terminal cover 356 may include electrically insulating materials to prevent short-circuiting.

The support portion 33 may include a fixing member 331 coupled to the terminal portion 35 and a heat blocking member 332 for preventing heat from being transmitted to the insulating plate 312. According to one embodiment, the heat blocking member 332 may be disposed between the fixing member 331 and the insulating plate 312 to prevent heat from being transmitted from the fixing member 331 to the insulating plate 312.

The fixing member 331 may be disposed on the rear surface of the insulating plate 312 (that is, on the surface facing the electrode assembly 10) and may be coupled to an end of the rivet terminal 351. According to one embodiment, the fixing member 331 may be coupled to the rivet terminal 351 by welding. In this case, heat generated during welding may be transmitted to the insulating plate 312 through the rivet terminal 351 and the fixing member 331. When heat is transmitted to the insulating plate 312, at least a portion of the insulating plate 312 may melt, thereby exposing the rear surface of the cap plate 311 or deteriorating the electrical insulation performance, which may cause defects in the battery cell 1.

The heat blocking member 332 of the present disclosure may be disposed between the insulating plate 312 and the fixing member 331 to prevent heat from being transmitted to the insulating plate 312, thereby minimizing or preventing heat transfer to the insulating plate 312. The heat blocking member 332 may include a material having low thermal conductivity. For example, the heat blocking member 332 may include at least one of mica, aerogel, glass fiber, silicate, graphite, aluminum, or ceramic wool. However, the heat blocking member 332 of the present disclosure is not limited to these examples. It is sufficient that the thermal conductivity (W/m·K) of the heat blocking member 332 is lower than that of at least one of the fixing member 331 or the rivet terminal 351, which are located on the heat transfer paths WP1 and WP2 described later.

Hereinafter, the structure of the heat blocking member 332 of the present disclosure will be described in more detail with reference to the drawings.

FIG. 10 is a view showing a heat transfer path generated during welding of the cap assembly according to an embodiment of the present disclosure.

Referring to FIG. 10, the rivet terminal 351 and the fixing member 331 may be welded together to be coupled to each other. Through this, a first weld portion W1 may be formed between the rivet terminal 351 and the fixing member 331. The first weld portion W1 may refer to a weld bead formed by melting the above-described components and may be referred to as a "fixed weld portion." That is, the battery cell 1 according to an embodiment of the present disclosure may further include the first weld portion W1 formed by welding between the rivet terminal 351 and the fixing member 331. Here, the heat blocking member 332 may be disposed on a first heat transfer path to prevent heat generated during the formation of the first weld portion W1 from being conducted to the insulating plate 312.

The term "first heat transfer path WP1" may refer to a heat transfer route along which heat generated during the formation of the first weld portion W1 propagates directly or indirectly toward the insulating plate 312. Specifically, with reference to the drawings, it may refer to the region between the fixing member 331 and the insulating plate 312. In addition, in embodiments not shown, it may further include the region between the rivet terminal 351 and the insulating plate 312.

Heat generated during the formation of the first weld portion W1 may be transmitted to the insulating plate 312 through the first heat transfer path WP1. Here, the heat blocking member 332 of the present disclosure may be disposed on the heat transfer path WP1 to prevent heat from being transmitted to the insulating plate 312.

According to one embodiment, the heat blocking member 332 may be disposed between the insulating plate 312 and the fixing member 331. In the drawings, the first heat transfer path WP1 is illustrated as a path through the fixing member 331; however, the present disclosure is not limited thereto, and the first heat transfer path WP1 may include all possible heat transmission routes generated during the formation of the first weld portion W1. That is, in other embodiments, a path through which heat propagates to the insulating plate 312 via the rivet terminal 351 may also be included in the first heat transfer path WP1.

In addition, in the present disclosure, the phrase "the heat blocking member 332 is disposed between the insulating plate 312 and the fixing member 331" means that it is sufficient for the heat blocking member 332 to prevent heat from being transmitted to the insulating plate 312 from the viewpoint of heat transfer, regardless of the exact physical arrangement. In other words, although in the drawings the heat blocking member 332 is shown as being disposed only between the insulating plate 312 and the fixing member 331, in embodiments not shown, the heat blocking member 332 may be disposed between the rivet terminal 351 and the insulating plate 312. That is, the heat blocking member 332 is not particularly limited as long as it is disposed on the heat transfer paths WP1 or WP2 to prevent heat generated during the formation of the weld portions W1 and W2 from being transmitted to the insulating plate 312.

As described above, the heat blocking member 332 may prevent the insulating plate 312 from melting due to the heat generated during the welding process.

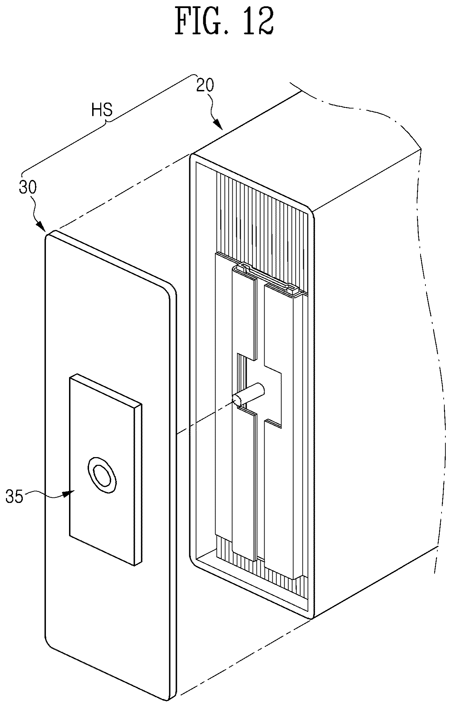

FIG. 11 is an exemplary view showing a state in which the electrode assembly and the connection assembly are connected according to an embodiment of the present disclosure. FIG. 12 is an exemplary view showing a state in which the cap assembly and the case are coupled according to an embodiment of the present disclosure.

Referring to the upper left view of FIG. 11, as described above, the electrode assembly 10 may include a coated portion 11 to which an active material is applied and a non-coated portion 12 to which no active material is applied.

Referring to the upper right view of FIG. 11, in the process of stacking a plurality of electrode plates of the electrode assembly 10, the non-coated portions 12 may be bound together in an aligned state at a predetermined position as illustrated in the drawing to form a bundle. These bundles of non-coated portions 12 may also be referred to as electrode tabs (or electrode connection portions); however, for convenience, they are referred to as the non-coated portions 12 in the present disclosure. In addition, although the drawing illustrates a plurality of electrode assemblies 10, each having non-coated portions 12 (or electrode tabs) protruding therefrom, the present disclosure is not limited thereto, and a single electrode assembly 10 may also be used.

Referring to the lower left and lower right views of FIG. 11, according to the present disclosure, a connection assembly 40 may further be provided between the cap assembly 30 and the electrode assembly 10 to electrically connect them to each other. Specifically, the connection assembly 40 may include a current collecting member 41 electrically connected to the electrode assembly 10, and a connection pin 45 protruding from the current collecting member 41 toward the terminal portion 35 and electrically connected thereto. The connection assembly 40 may also include an insulating member 42 disposed between the current collecting member 41 and the electrode assembly 10.

The current collecting member 41 may include a conductive metal and may be electrically connected to the electrode assembly 10. According to one embodiment, at least a portion of the non-coated portion 12 of the electrode assembly 10 may be bent and come into contact with a surface of the current collecting member 41 facing the cap plate 311, thereby forming an electrical connection.

The connection pin 45 may protrude from the above-described surface of the current collecting member 41 toward the cap assembly 30. According to one embodiment, at least a portion of the connection pin 45 may be inserted into a rivet hole 30a of the rivet terminal 351 to be electrically connected to the rivet terminal 351. The connection pin 45 may provide a current flow path between the rivet terminal 351 and the current collecting member 41.

The connection assembly 40 may serve as a current flow path between the terminal portion 35 and the electrode assembly 10. The insulating member 42 may include an electrically insulating material and may be disposed between the current collecting member 41 and the coated portion 11 of the electrode assembly 10. According to one embodiment, the insulating member 42 may be disposed on a rear surface of the current collecting member 41 (that is, the surface facing the electrode assembly 10). The insulating member 42 may surround the rear surface of the current collecting member 41, its side surfaces, and at least a portion of the above-described surface. That is, the surface of the current collecting member 41 not covered by the insulating member 42 may be electrically connected to the non-coated portion 12. Referring to the drawing, the non-coated portion 12 may include an avoidance portion 14 that is partially cut to prevent interference with the connection pin 45. The connection pin 45 may protrude into a space formed by the avoidance portion 14.

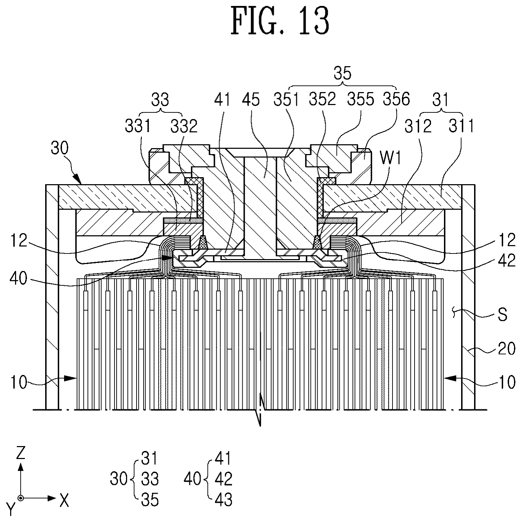

Referring to FIG. 12, the cap assembly 30 may be coupled to the case 20 in which the connection assembly 40 and the electrode assembly 10 are accommodated. Here, the cap assembly 30 may be provided in a component unit state in which the first weld portion W1 has already been formed; however, the present disclosure is not limited thereto. During the process in which the cap assembly 30 is coupled to the case 20, the connection pin 45 may be inserted into the rivet terminal 351 (see FIG. 13).

Hereinafter, the coupled state of the cap assembly 30 will be described with reference to the drawings.

FIG. 13 is a cross-sectional view according to an embodiment of the present disclosure.

Referring to FIG. 13, the cap assembly 30 may be coupled to the case 20. In this state, the connection pin 45 may be inserted into the rivet terminal 351 and electrically connected thereto. With such a structure, the terminal unit 355 of the terminal portion 35 may be electrically connected to the electrode assembly 10.

In addition, according to one embodiment, the connection pin 45 may be welded and coupled to the rivet terminal 351 while being inserted therein. The heat blocking member 332 of the present disclosure may prevent heat generated during the welding process between the rivet terminal 351 and the connection pin 45 from being transmitted to the insulating plate 312. Hereinafter, this will be described in detail with reference to the drawings.

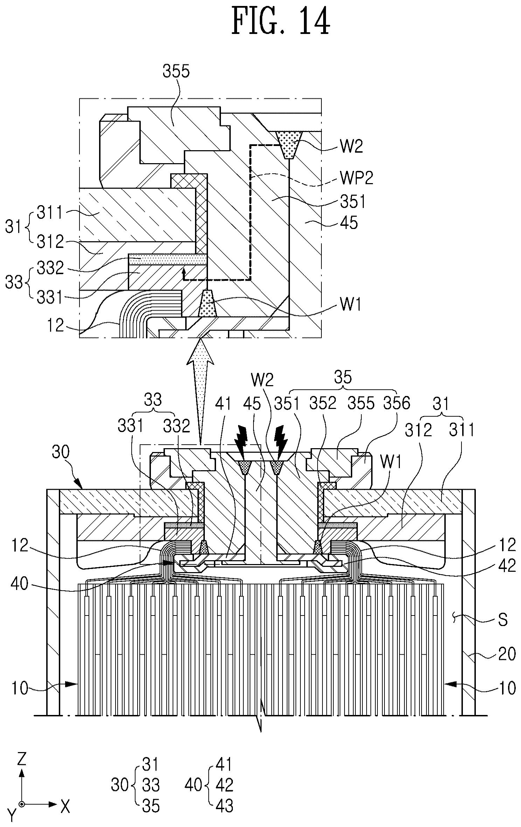

FIG. 14 is a view showing a heat transfer path generated during welding of the connection assembly according to an embodiment of the present disclosure.

Referring to the drawings, the end portions of the rivet terminal 351 and the connection pin 45 may be welded together to form a second weld portion W2, which may also be referred to as a "pin weld portion." That is, the battery cell 1 according to an embodiment of the present disclosure may further include the second weld portion W2 formed by welding between the rivet terminal 351 and the connection pin 45. Here, the heat blocking member 332 may be disposed on a second heat transfer path WP2 to prevent heat generated during the formation of the second weld portion W2 from being conducted to the insulating plate 312.

The term "second heat transfer path WP2" may refer to a heat transfer route along which heat generated during the formation of the second weld portion W2 propagates directly or indirectly toward the insulating plate 312. Specifically, with reference to the drawings, it may refer to the region between the fixing member 331 and the insulating plate 312. In addition, in embodiments not shown, it may further include the region between the rivet terminal 351 and the insulating plate 312.

That is, the first heat transfer path WP1 and the second heat transfer path WP2 may overlap at least partially (for example, between the fixing member 331 and the insulating plate 312), and the heat blocking member 332 may be disposed there (for example, between the fixing member 331 and the insulating plate 312). Through this, the heat blocking member 332 may prevent heat generated during the formation of at least one of the first weld portion W1 or the second weld portion W2 from being transmitted to the insulating plate 312.

Meanwhile, the heat generated during the formation of the second weld portion W2 may be transmitted to the insulating plate 312 through the second heat transfer path WP2. Here, the heat blocking member 332 of the present disclosure may be disposed on the heat transfer path WP2 to prevent heat from being transmitted to the insulating plate 312.

According to one embodiment, the heat blocking member 332 may be disposed between the insulating plate 312 and the fixing member 331 to prevent heat transmitted from the rivet terminal 351 to the fixing member 331 from being further transmitted to the insulating plate 312.

Although in the drawings only the path through the fixing member 331 is illustrated as the second heat transfer path WP2, the present disclosure is not limited thereto. For example, the second heat transfer path WP2 may include all heat transmission routes generated during the formation of the second weld portion W2. That is, in other embodiments, a path through which heat propagates to the insulating plate 312 via the rivet terminal 351 may also be included in the second heat transfer path WP2. In other words, the second heat transfer path WP2 may include all routes through which heat propagates directly or indirectly from the rivet terminal 351 to the insulating plate 312 during the formation of the second weld portion W2.

In the present disclosure, the phrase "the heat blocking member 332 is disposed between the insulating plate 312 and the fixing member 331" means that it is sufficient for the heat blocking member 332 to prevent heat from being transmitted to the insulating plate 312 from the viewpoint of heat transfer, regardless of the exact physical arrangement. In other words, although in the drawings the heat blocking member 332 is shown as being disposed only between the insulating plate 312 and the fixing member 331, in embodiments not shown, the heat blocking member 332 may be disposed in at least a portion of the region where the gasket 352 is located. In other embodiments, the heat blocking member 332 may be disposed between the rivet terminal 351 and the insulating plate 312.

As described above, the heat blocking member 332 of the present disclosure is not limited to being disposed only between the insulating plate 312 and the fixing member 331, but may be disposed at any position along the heat transfer paths WP1 or WP2, as long as it prevents heat generated during the formation of the weld portions W1 and W2 from being transmitted to the insulating plate 312.

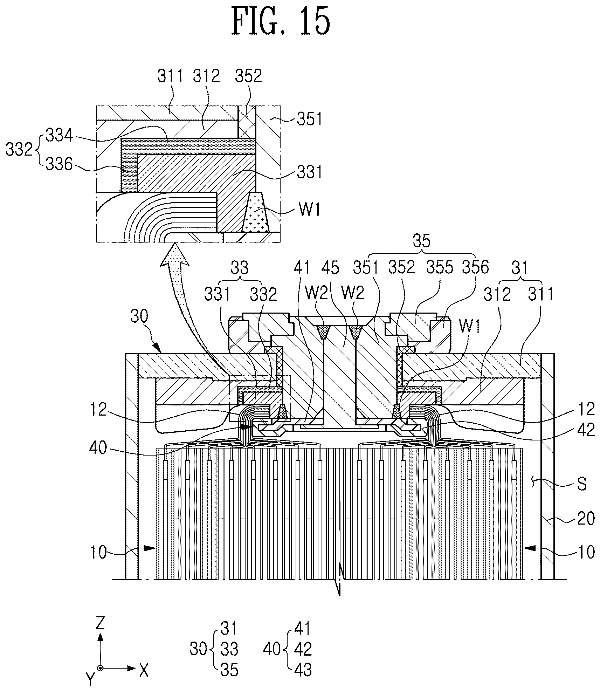

FIG. 15 is a cross-sectional view of a welded state of a battery cell according to an embodiment of the present disclosure.

FIG. 15 illustrates various arrangement structures of the heat blocking member 332. Referring to FIG. 10, the heat blocking member 332 may include a first blocking portion 334 covering one surface of the fixing member 331 that faces the plate portion 31, and a second blocking portion 336 covering a side surface of the fixing member 331. Specifically, the heat blocking member 332 may include the first blocking portion 334 disposed between the insulating plate 312 and the fixing member 331 along a first direction (Z-axis), and the second blocking portion 336 disposed between the insulating plate 312 and the fixing member 331 along a direction (X-axis) perpendicular to the first direction.

In addition, in embodiments not illustrated, the heat blocking member 332 may further include a third blocking portion (not shown) disposed between the insulating plate 312 and the rivet terminal 351 along a second direction (X-axis). The heat blocking member 332 may include at least one of the first blocking portion 334, the second blocking portion 336, and the third blocking portion.

As described above, the heat blocking member 332 of the present disclosure may be disposed in at least one of the first heat transfer path WP1 or the second heat transfer path WP2 to prevent welding heat from being transmitted to the insulating plate 312.

Meanwhile, although the heat transfer paths WP1 and WP2 of the present disclosure are illustrated as heat transfer paths generated during welding for the convenience of explanation, the present disclosure is not limited thereto. The heat transfer paths of the present disclosure may also include routes along which heat is transmitted to the insulating plate 312 due to the temperature inside the accommodating space S or the temperature outside the case 20.

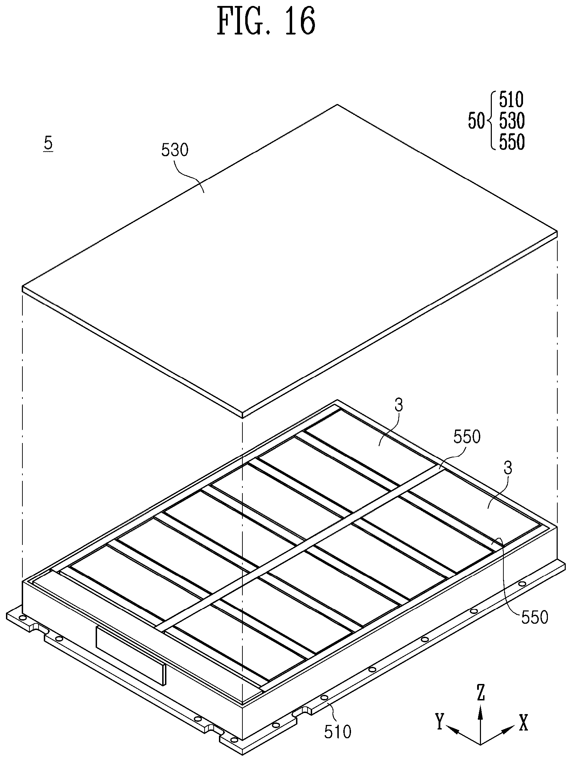

FIG. 16 is an exemplary view showing a battery module and a battery pack including the battery cell according to the present disclosure. FIG. 16 illustrates a battery module 3 and a battery pack 5 including the battery cells 1 and 100 described in FIGS. 1 to 15, and redundant descriptions are omitted.

Referring to FIG. 16, the present disclosure may include a battery module 3 or a battery pack 5 including at least one of the battery cells 1 and 100 described above.

According to one embodiment, the battery pack 5 of the present disclosure may include a pack housing 50 in which the battery module 3 including the battery cells 1 and 100 is accommodated. The pack housing 50 may include a lower housing 510, a partition wall 550 dividing the housing 50 into a plurality of loading spaces, and an upper housing 530 covering the lower housing 510. Meanwhile, unlike the illustration, the battery pack 5 of the present disclosure may also be configured in a structure in which the battery cells 1 and 100 are directly accommodated (so-called "Cell to Pack" structure).

Meanwhile, the battery pack 5 of the present disclosure is provided for the convenience of understanding, and is not particularly limited as long as it is a power source including the battery cells 1 and 100. In other words, the term "battery pack 5" as referred to in the present disclosure is not limited to a pack including the battery cells 1 and 100, but may encompass an energy storage system (ESS), an electric vehicle (EV), and the like.

Some of the aspects of the present disclosure are as follows:
Aspect 1: In a cap assembly coupled to a case that accommodates an electrode assembly to cover one open side of the case, the cap assembly comprising: a cap plate including a first hole; a cylindrical terminal portion including an insertion hole and inserted into the first hole to be connected to the electrode assembly; a sheet-shaped first insulating member disposed to face the cap plate; and a heat insulating member disposed between the first insulating member and the terminal portion.
Aspect 2: The cap assembly according to claim 1, further comprising a terminal plate disposed on the cap plate.
Aspect 3: The cap assembly according to any one of the preceding aspects, further comprising a second insulating member disposed between the cap plate and the terminal plate.
Aspect 4: The cap assembly according to any one of the preceding aspects, further comprising a gasket disposed between the terminal portion and the cap plate.
Aspect 5: The cap assembly according to any one of the preceding aspects, wherein the heat insulating member has a plate shape including a ring-shaped second hole.
Aspect 6: The cap assembly according to any one of the preceding aspects, wherein a diameter of the second hole is greater than a diameter of the insertion hole.
Aspect 7: The cap assembly according to any one of the preceding aspects, wherein the heat insulating member is formed of any one or a combination of PI (polyimide), PP (polypropylene), PPS (polyphenylene sulfide), and C-PET (crystalline polyethylene terephthalate).
Aspect 8: The cap assembly according to any one of the preceding aspects, further comprising a support plate coupled to an outer circumferential surface of the terminal portion.
Aspect 9: A battery cell comprising: an electrode assembly; a case having an accommodation space formed therein to accommodate the electrode assembly; and a cap assembly coupled to the case to cover one open side of the case, wherein the cap assembly comprises: a cap plate including a first hole; a cylindrical terminal portion including an insertion hole and inserted into the first hole to be connected to the electrode assembly; a sheet-shaped first insulating member disposed to face the cap plate; and a heat insulating member disposed between the first insulating member and the terminal portion.
Aspect 10: The battery cell according to any one of the preceding claims, further comprising a current collector plate disposed to face the cap plate and electrically connected to the electrode assembly.
Aspect 11: The battery cell according to any one of the preceding aspects, wherein the current collector plate includes a connection pin, and the insertion hole and the connection pin are welded to each other.
Aspect 12: The battery cell according to any one of the preceding aspects, wherein the cap assembly further comprises a support plate disposed between the heat insulating member and the current collector plate.
Aspect 13: The battery cell according to any one of the preceding aspects, wherein the heat insulating member is disposed between the first insulating member and the support plate, and the first insulating member is disposed between the cap plate and the heat insulating member.
Aspect 14: The battery cell according to any one of the preceding aspects, wherein the cap assembly further comprises a terminal plate disposed on the cap plate.
Aspect 15: The battery cell according to any one of the preceding aspects, wherein the cap assembly further comprises a second insulating member disposed between the cap plate and the terminal plate.

The present disclosure may be embodied in various forms, and the scope of rights is not limited to the above-described embodiments. Therefore, if a modified embodiment includes components of the claims of the present disclosure, it should be regarded as falling within the scope of the present disclosure.

## Claims

1. A cap assembly adapted to be coupled to a case that accommodates an electrode assembly to cover one open side of the case, the cap assembly comprising:
a cap plate including a first hole;
a cylindrical terminal portion including an insertion hole and inserted into the first hole to be connected to the electrode assembly;
a sheet-shaped first insulating member disposed to face the cap plate; and
a heat insulating member disposed between the first insulating member and the terminal portion.

2. The cap assembly according to claim 1, further comprising a terminal plate disposed on the cap plate.

3. The cap assembly according to any one of the preceding claims, further comprising a second insulating member disposed between the cap plate and the terminal plate.

4. The cap assembly according to any one of the preceding claims, further comprising a gasket disposed between the terminal portion and the cap plate.

5. The cap assembly according to any one of the preceding claims, wherein the heat insulating member has a plate shape including a ring-shaped second hole.

6. The cap assembly according to any one of the preceding claims, wherein a diameter of the second hole is greater than a diameter of the insertion hole.

7. The cap assembly according to any one of the preceding claims, wherein the heat insulating member is formed of any one or a combination of PI (polyimide), PP (polypropylene), PPS (polyphenylene sulfide), and C-PET (crystalline polyethylene terephthalate).

8. The cap assembly according to any one of the preceding claims, further comprising a support plate coupled to an outer circumferential surface of the terminal portion.

9. A battery cell comprising:
an electrode assembly;
a case having an accommodation space formed therein to accommodate the electrode assembly; and
a cap assembly coupled to the case to cover one open side of the case,
wherein the cap assembly comprises:
a cap plate including a first hole;
a cylindrical terminal portion including an insertion hole and inserted into the first hole to be connected to the electrode assembly;
a sheet-shaped first insulating member disposed to face the cap plate; and
a heat insulating member disposed between the first insulating member and the terminal portion.

10. The battery cell according to any one of the preceding claims, further comprising a current collector plate disposed to face the cap plate and electrically connected to the electrode assembly.

11. The battery cell according to any one of the preceding claims, wherein the current collector plate includes a connection pin, and the insertion hole and the connection pin are welded to each other.

12. The battery cell according to any one of the preceding claims, wherein the cap assembly further comprises a support plate disposed between the heat insulating member and the current collector plate.

13. The battery cell according to any one of the preceding claims, wherein the heat insulating member is disposed between the first insulating member and the support plate, and the first insulating member is disposed between the cap plate and the heat insulating member.

14. The battery cell according to any one of the preceding claims, wherein the cap assembly further comprises a terminal plate disposed on the cap plate.

15. The battery cell according to any one of the preceding claims, wherein the cap assembly further comprises a second insulating member disposed between the cap plate and the terminal plate.
